# EUROPÄISCHE PATENTANMELDUNG

(11) **EP 2 698 646 A1**
(43) Veröffentlichungstag der Anmeldung: **19.02.2014**
(21) Anmeldenummer: 13179178.2
(22) Anmeldetag: 02.08.2013
(51) Int. Cl.: G01S 7/41, G01S 13/58, G01S 13/91, G08G 1/015, G08G 1/01

(54) **Verfahren zur Klassifizierung von fahrenden Fahrzeugen durch Verfolgung einer Positionsgröße des Fahrzeuges**

(30) Priorität: 14.08.2012 DE 102012107444
(71) Anmelder: Jenoptik Robot GmbH, 40789 Monheim (DE)
(72) Erfinder: Lehning, Michael, 31137 Hildesheim (DE)
(74) Vertreter: Schaller, Renate

(57) **Zusammenfassung**

Verfahren bei dem Fahrzeuge (3) beim Durchfahren eines Radarkegels (12) mehrfach angemessen werden und den Messzeitpunkten (tₙ)zugeordnet spezifische Positionsgrößen (32) gebildet werden. Das kann eine spezifische Radialentfernung (sᵣ) oder ein spezifischer Objektwinkel (β) sein. Deren zeitliche Änderung wird auf einen Abschnitt einer Unstetigkeit (U) hin analysiert. Die Länge dieses Abschnittes ist abhängig von der Länge des Fahrzeugs (3) und erlaubt eine Klassifizierung.

## Beschreibung

Die Erfindung betrifft ein Verfahren zur Klassifizierung von Fahrzeugen, wie es gattungsgemäß aus der Patentschrift EP 2 011 103 B1 bekannt ist.

Die Klassifizierung von Fahrzeugen im fließenden Verkehr weist ein breites Anwendungsspektrum auf. Insbesondere im Rahmen einer automatisierten Überwachung und Regelung des Straßenverkehrs kommt der automatischen Grobklassifizierung, zur Einteilung der Fahrzeuge in große und langsamere Fahrzeuge (LKWs, Busse) sowie in kleinere und schnellere Fahrzeuge (PKWs), eine besondere Bedeutung zu. Entsprechend der erfassten Fahrzeugklasse können beispielsweise nach Fahrzeugklassen differenziert Mautgebühren erhoben, Ampelanlagen geregelt oder Verkehrsverstöße geahndet werden.

In den aus dem Stand der Technik bekannten Verfahren zur Grobklassifizierung von Fahrzeugen erfolgt eine Zuordnung zu einer Fahrzeugklasse häufig durch die Ermittlung der individuellen Fahrzeuglänge anhand des Ein- und Austritts eines Fahrzeugs in den Messbereich einer Messeinrichtung. Mittels Auswertverfahren kann aus den aufgenommenen Messsignalen mit ausreichender Sicherheit ein auswertbares Merkmal für die Fahrzeuglänge generiert werden, das eine Zuordnung der Fahrzeuge zur Klasse der Busse bzw. LKWs oder zur Klasse der PKWs gestattet. Hierzu bekannte Vorrichtungen arbeiten dabei entweder mit Induktionsschleifen, welche die Klassifizierung anhand der bei einer Überfahrt ermittelten Länge und Bodenfreiheit der Fahrzeuge durchführen, oder mit Radargeräten, welche die Klassifizierung anhand der Durchfahrt des Fahrzeugs durch den Kegel des Radarstrahls (Radarkegel) mittels einer aus der Durchfahrtsdauer und der Geschwindigkeit ermittelten Fahrzeuglänge durchführen.

In einem in der Offenlegungsschrift EP 1 990 654 A1 offenbarten Verfahren erfolgt die Ermittlung der Fahrzeuglänge durch ein neben der Fahrbahn in einem spitzen Winkel zum Fahrbahnrand aufgestelltes Radargerät. Anhand der beim Eintreten und Verlassen des Fahrzeugs ermittelten Entfernungspunkte und dem bekannten Aufstellwinkel kann die Länge der Durchfahrtsstrecke des Fahrzeugs durch den Radarkegel ermittelt werden. Aus der ermittelten Fahrzeuggeschwindigkeit und der Durchfahrtszeit kann die in dieser Zeit vom Fahrzeug zurückgelegte Gesamtstrecke ermittelt werden. Damit kann aus der Differenz der Gesamtstrecke und der Durchfahrtsstrecke die Fahrzeuglänge berechnet werden und durch einen Vergleich mit den für eine Klasse typischen Fahrzeuglängen das erfasste Fahrzeug klassifiziert werden. Fehlereinflüsse, die sich aus der gegenseitigen Verdeckung von Fahrzeugen ergeben, können mit diesem Verfahren nicht aufgelöst werden.

Bei einem in der Offenlegungsschrift DE 38 10 357 A1 beschriebenen Verfahren, erfolgt die Klassifizierung ebenfalls anhand der ermittelten Fahrzeuglänge. Dazu wird zunächst während der Durchfahrt eines Fahrzeuges durch den Radarkegel eines Radargerätes ein Dopplerecho aufgenommen und aus dessen Frequenzspektrum die Frequenz mit maximaler Amplitude ermittelt. Anhand dieser Frequenz wird eine Geschwindigkeit ermittelt. Aus der Geschwindigkeit und der Signaldauer des Dopplerechos kann dann die Fahrzeuglänge ermittelt werden. Die Messung der Fahrzeuglänge über die Signaldauer ist mit mehreren Fehlereinflüssen verbunden. Da die Radarstrahlung von einer von der Fahrzeuglänge abhängig großen Fläche reflektiert wird, wird die Signaldauer prinzipiell um die Fahrzeuglänge verfälscht erfasst. Weiterhin führen Abschattungen der schräg auf die Fahrzeuge gerichteten Radarstrahlung an Teilen der Fahrzeuge zu einer verfälschten Längenmessung. Zur Erhöhung der Genauigkeit der Längenmessung wird ein für jede Einflussgröße getrennt und empirisch ermittelter Korrekturfaktor verwendet. Die Klassifizierung erfolgt abschließend durch den Vergleich des korrigierten zeitlichen Verlaufs des Dopplerechos mit dem von gespeicherten und identifizierten Mustern. Letztendlich ist die ermittelte Fahrzeuglänge jedoch nur eine sehr grobe Schätzung, bei der es leicht zu fehlerhaften Klassifizierungsergebnissen kommen kann.

Eine Möglichkeit, die Klassifikation von Fahrzeugen ohne eine unmittelbare Erfassung der Fahrzeuglänge durchzuführen, wird in der Patentschrift EP 2 011 103 B1 beschrieben. Mit einem Radargerät wird ein Radarstrahl entlang eines Verkehrsweges ausgerichtet. Es wird ein linear-frequenzmoduliertes CW-Radargerät verwendet, mit dem sich Geschwindigkeiten und Entfernungen von Verkehrsteilnehmern ermitteln lassen. Die von Verkehrsteilnehmern reflektierten Signale werden vom Rauschen separiert und in einer Datenverarbeitungseinrichtung ausgewertet. Als Ergebnis dieser Verarbeitung werden zwei Fourier-Transformationskoeffizienten erzeugt, wobei der eine Koeffizient eine Funktion der Entfernung und der andere Koeffizient eine Funktion der Geschwindigkeit der erfassten Verkehrsteilnehmer darstellt. Werden beide Funktionen in den zwei Dimensionen eines kartesischen Diagramms gegeneinander aufgetragen, entstehen für die unterschiedlichen Verkehrsteilnehmer charakteristische Muster. Die Zusammensetzung und Form dieser Muster ist dabei ein Maß für die Streuung der Geschwindigkeiten und Abstände der reflektierten Signale eines Verkehrsteilnehmers, deren statistische Auswertung eine Zuordnung von Verkehrsteilnehmern zu vordefinierten Klassen zulassen. Aufgrund des Messprinzips des linear-frequenzmodulierten CW-Radargeräts können jedoch keine Winkel erfassten Objekten zugeordnet werden. Damit ist es zwar möglich festzustellen, dass sich z. B. ein PKW oder ein LKW im Radarkegel befindet, jedoch kann diese Aussage, sofern sich mehrere Verkehrsteilnehmer gleichzeitig im Radarkegel befinden, nicht sicher zugeordnet werden.

Es ist die Aufgabe der Erfindung ein Verfahren zu finden, das geeignet ist, mehrere einen Radarkegel durchfahrende Fahrzeuge gleichzeitig und sicher zu klassifizieren.

Erfindungsgemäß wird die Aufgabe für ein Verfahren zum Klassifizieren von fahrenden Fahrzeugen, durch Verfolgung einer Positionsgröße des Fahrzeuges, bei dem Fahrzeuge beim Durchfahren eines durch Radarstrahlung gebildeten Radarkegels angemessen werden, indem die mit Radarstrahlung beaufschlagten Oberflächen der Fahrzeuge die Radarstrahlung reflektieren und in einem die Radarstrahlung aussendenden und empfangenden Radargerät Messsignale generieren, mit folgenden Verfahrensschritten gelöst.

Es wird ein Radargerät, das innerhalb einer Messdauer zu mehreren Messzeitpunkten eine Vielzahl vom Messsignalen empfängt, wobei pro Messsignal eine Radialgeschwindigkeit und als Positionsgrößen eine Radialentfernung und ein Objektwinkel ableitbar sind, in einer bekannten Aufstellhöhe und einem bekannten vertikalen Aufstellwinkel zur Fahrbahnoberfläche einer Fahrbahn sowie einem bekannten horizontalen Aufstellwinkel und Abstand zu einem Fahrbahnrand der Fahrbahn angeordnet.

Dieses Radargerät sendet eine einen Radarkegel bildende Radarstrahlung aus und es werden zu mehreren Messzeitpunkten Messsignale erfasst.

Aus diesen Messsignalen werden pro Messzeitpunkt Radialgeschwindigkeiten, Objektwinkel und Radialentfernungen abgeleitet und einem diese gegebenenfalls verursachenden den Radarkegel durchfahrenden Fahrzeug zugeordnet.

Es wird pro Messzeitpunkt aus den einem Fahrzeug zugeordneten Radialentfernungen oder Objektwinkeln mit einer jeweils gleichen Rechenvorschrift eine spezifische Positionsgröße gebildet und eine Fahrzeuggeschwindigkeit berechnet.

Die spezifischen Positionsgrößen werden als Funktion über eine die Messzeitpunkte umfassende Messdauer abgespeichert und es wird ein Abschnitt von Unstetigkeit im Verlauf der Funktion festgestellt, der durch sprunghafte Änderungen der spezifischen Positionsgröße über die Messzeit begrenzt ist.

Abschließend wird eine geschwindigkeitsnormierte Länge des Abschnittes der Unstetigkeit mit Hilfe der berechneten Fahrzeuggeschwindigkeit ermittelt und es wird diese geschwindigkeitsnormierte Länge des Abschnittes mit abgespeicherten für verschiedene Fahrzeugklassen typische geschwindigkeitsnormierte Längen solcher Abschnitte verglichen, um damit das Fahrzeug zu klassifizieren. Das Fahrzeug wird dann in die Fahrzeugklasse klassifiziert für welche die geschwindigkeitsnormierte Länge des Abschnittes der abgespeicherten typischen Länge am nächsten kommt.

Vorteilhaft wird die spezifische Positionsgröße pro Messzeitpunkt durch Berechnung des arithmetischen Mittelwertes, der diesem Messezeitpunkt zugeordneten Radialentfernungen, gebildet, wobei wenigstens einer der Aufstellwinkel ein spitzer Winkel ist.

Alternativ wird vorteilhaft die spezifische Positionsgröße pro Messzeitpunkt durch Berechnung des arithmetischen Mittelwertes, der diesem Messezeitpunkt zugeordneten Objektwinkel, gebildet, wobei wenigstens einer der horizontalen Aufstellwinkel ein spitzer Winkel ist und der vertikale Aufstellwinkel < 5° ist.

Es ist auch von Vorteil, wenn aus den zugeordneten Messsignalen messzeitpunktbezogen wenigstens ein fahrzeugbezogenes Koordinatensystem (wird bevorzugt zu jedem Messzeitpunkt korrigiert) berechnet wird, dessen Lage und Ausrichtung zu jedem Messzeitpunkt durch einen temporären Ort des Koordinatenursprungs, bestimmt durch die spezifische Positionsgröße und eine temporäre Fahrtrichtung, bestimmt ist und die pro Messzeitpunkt, abgeleiteten Radialentfernungen und Objektwinkel, die jeweils Ortskoordinaten eines Rohzieles am Fahrzeug zu diesem Messzeitpunkt darstellen, jeweils in das fahrzeugbezogene Koordinatensystem überführt werden, um dann die statistische Verteilung der Lage der Rohziele mit abgespeicherten, für verschiedene Fahrzeugklassen typischen Verteilungen, (durch die Geometrie des Fahrzeuges bestimmt) zu vergleichen werden, womit die getroffene Klassifizierung des Fahrzeuges verifiziert wird.

Besonders vorteilhaft wird die statistische Verteilung der Lage der Rohziele zu einzelnen Messzeitpunkten zusammengeführt indem die Koordinatensysteme überlagert werden.

Nachfolgend soll die Erfindung anhand von Ausführungsbeispielen näher erläutert werden. In den zugehörigen Zeichnungen zeigen:
- Fig 1: eine schematische Darstellung einer Möglichkeit der Anordnung eines Radargerätes zu einer Fahrbahn,
- Fig. 2a: den prinzipiellen Ablauf der Erfassung von Rohzielen an einem sich durch den Radarkegel bewegenden Fahrzeug,
- Fig. 2b: ein Entfernungs-Zeit-Diagramm,
- Fig. 2c: ein Objektwinkel-Zeit-Diagramm und
- Fig. 3: Darstellung der Erfassung einer typischen statischen Streuung von Rohzielen.

Für das Verfahren zum Klassifizieren eines oder auch zum gleichzeitigen Klassifizieren mehrerer sich auf einer Fahrbahn 2 fortbewegenden Fahrzeuge 3 wird als ein Radargerät 1, ein FSK-Radargerät, eine Sonderform des aus dem Stand der Technik bekannten FMCW-Radargerätes, verwendet, mit dem gleichzeitig mehrere Fahrzeuge 3 erfasst und auch verfolgt (Tracking) werden können. Ein FSK-Radargerät 1 (FSK = Frequency Shift Keying) sendet eine Radarstrahlung 11 auf mindestens zwei alternierenden Trägerfrequenzen aus bzw. nimmt von erfassten Fahrzeugen 3 verursachte Reflexionssignale der mindestens zwei alternierenden Trägerfrequenzen wieder auf. Durch die Auswertung von Frequenzverschiebungen zwischen und innerhalb der mindestens zwei von den Fahrzeugen 3 reflektierten Trägerfrequenzen, wird innerhalb einer kurzen Messdauer eine gute Auflösung zwischen mehreren Fahrzeugen 3 entsprechend deren Radialentfernungen, Radialgeschwindigkeiten und Objektwinkeln gegenüber dem Radargerät 1 ermöglicht.

Zur Durchführung des erfindungsgemäßen Verfahrens ist es grundsätzlich erforderlich, die Position und Ausrichtung des Radargeräts 1 gegenüber der Fahrbahn 2 genau zu kennen, es sei denn, das Anlernen des Radargerätes 1 erfolgt unmittelbar vor der Durchführung des Verfahrens und das Verfahren ist nicht verbunden mit einer optionalen und fahrzeugspezifischen Verkehrsverstoßahndung, zu der eine Berechnung der realen Fahrzeuggeschwindigkeit erfolgen muss.

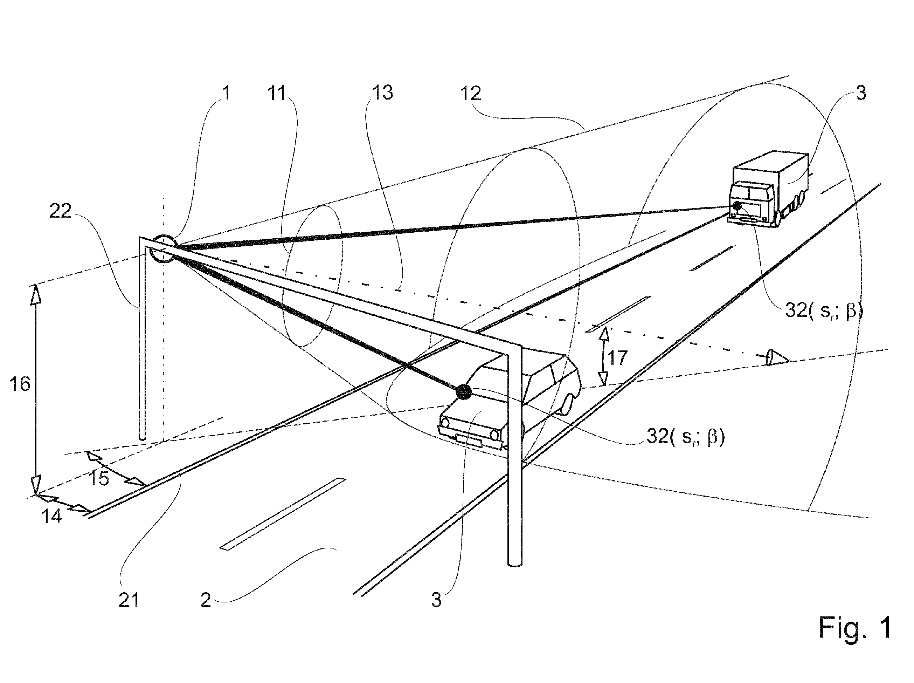

Zur besseren Erläuterung von möglichen Positionen und Ausrichtungen, die das Radargerät 1 gegenüber der Fahrbahn 2 einnehmen kann, ist in **Fig. 1** eine praxisrelevante Aufstellung des Radargeräts 1 dargestellt. Das Radargerät 1 ist hier in einer Position angeordnet, bei der es sich in unmittelbarer Nähe zu einem Fahrbahnrand 21, neben der Fahrbahn 2 und oberhalb der Oberfläche der Fahrbahn 2, in Höhe einer die Fahrbahn 2 überspannenden Brücke 22 befindet. Die Position des Radargeräts 1 kann anhand eines horizontalen, senkrechten Aufstellabstands 14 zum Fahrbahnrand 21 und eines vertikalen, senkrechten Aufstellabstands 16 zur Oberfläche der Fahrbahn 2 beschrieben werden. In Abhängigkeit von den Abstrahleigenschaften des Radargeräts 1 bildet die Radarstrahlung 11 einen vom Radargerät 1 ausgehenden und sich aufweitenden Radarkegel 12 mit einer Symmetrieachse 13. Die Ausrichtung des Radarkegels 12 und damit des Radargeräts 1 gegenüber der Fahrbahn 2 kann anhand eines horizontalen Aufstellwinkels 15 der Symmetrieachse 13 zum Fahrbahnrand 21 und eines vertikalen Aufstellwinkels 17 der Symmetrieachse 13 zur Oberfläche der Fahrbahn 2 beschrieben werden.

Aus der Position und Ausrichtung des Radargeräts 1 und aus der Ermittlung von, aus den Reflexionssignalen erzeugten, unmittelbar ableitbaren Messgrößen (Radialgeschwindigkeit, Radialentfernung und Objektwinkel), können dann weitere ableitbare Merkmale für ein erfasstes Fahrzeug 3 berechnet werden. Bei den weiteren ableitbaren Merkmalen kann es sich z. B. um eine Fahrtrichtung bzw. einen Fahrzeugwinkel α und eine Fahrzeuggeschwindigkeit handeln.

Die Fahrtrichtung ist dabei die tatsächliche Fortbewegungsrichtung des Fahrzeugs 3 auf der Fahrbahn 2, die nicht mit der Richtung der Radialentfernung zum Radargerät 1 übereinstimmt und außerdem, z. B. durch einen Fahrspurwechsel des Fahrzeugs 3, nicht zwingend dem Richtungsverlauf der Fahrbahn 2 entsprechen muss, das heißt parallel zum Fahrbahnrand 21 verlaufen muss.

Aus der Fahrtrichtung kann gleichzeitig auf den Fahrzeugwinkel α geschlossen werden, den das Fahrzeug 3 jeweils mit seiner Längsachse in der Fahrtrichtung mit der Richtung der radialen Entfernung zum Radargerät 1 einschließt.

Die Fahrzeuggeschwindigkeit ist die tatsächliche Geschwindigkeit des Fahrzeugs 3, mit der es sich in Fahrtrichtung auf der Fahrbahn 2 fortbewegt.

Wird, zur vereinfachten Begriffsklärung, das Fahrzeug 3 auf das Reflexionssignal eines einzigen, punktförmigen Reflektors reduziert, entspricht die Radialentfernung dem direkten Abstand des punktförmigen Reflektors zum Mittelpunkt der die Radarstrahlung 11 abgebenden Sendeeinheit des Radargeräts 1, durch den auch die Symmetrieachse 13 des Radarkegels 12 verläuft. Die Radialentfernung kann unmittelbar aus einer gemessenen Phasenverschiebung zwischen den Reflexionssignalen der mindestens zwei verwendeten Trägerfrequenzen des FSK-Radars 1 abgeleitet werden. Da das Radargerät 1 außerhalb der Fahrbahn 2, winklig zum Fahrbahnrand 21 und zur Oberfläche der Fahrbahn 2 angeordnet ist, ist die Radialgeschwindigkeit nur die Geschwindigkeitskomponente der realen Fahrzeuggeschwindigkeit, die durch die direkt in Richtung des Radargerät 1 ausgeführte Annäherung des punktförmigen Reflektors (in Richtung der Radialentfernung) erfasst wird.

Als Objektwinkel soll hier der Winkel bezeichnet werden, der im Mittelpunkt der die Radarstrahlung 11 abgebenden Sendeeinheit des Radargeräts 1 zwischen der Symmetrieachse 13 des Radarkegels 12 und der direkten Verbindung zwischen dem punktförmigen Reflektor und dem Mittelpunkt der Sendeeinheit des Radargeräts 1 (Richtung der Radialentfernung) aufgespannt wird. Es ist dem Fachmann klar, dass es sich hier um eine Vereinfachung handelt, um durch die Einführung einer Achse einer winkelauflösenden Empfängereinheit, die parallel und vernachlässigbar nahe zur Symmetrieachse 13 verläuft, die Beschreibung der Erfindung nicht unnötig zu verkomplizieren.

Zum Aufnehmen der unmittelbar ableitbaren Messgrößen wird in einem ersten Verfahrensschritt das Radargerät 1 so zur Fahrbahn 2 positioniert, dass sich die Fahrzeuge 3 durch den Radarkegel 12 hindurch bewegen und Reflexionssignale, die an mit Radarstrahlung 11 beaufschlagten und Radarstrahlung 11 reflektierenden Oberflächen der Fahrzeuge 3 auftreten, erfasst werden können. Die reflektierenden Oberflächen der Fahrzeuge 3 werden dabei aus einer Vielzahl von Minireflektoren gebildet. Die Minireflektoren sind kleinste Oberflächenabschnitte des Fahrzeugs 3, deren Oberflächenausdehnung und Oberflächenausrichtung gegenüber der Radarstrahlung 11 ein Reflexionssignal erzeugen kann. Ein für eine Detektion hinreichend intensives Reflexionssignal wird an Oberflächenabschnitten des Fahrzeugs 3 auftreten, in denen eine Vielzahl der Minireflektoren räumlich nah beieinander liegen. Eine solche lokale Anhäufung der Minireflektoren wird bei der Aufnahme der unmittelbar ableitbaren Messgrößen zusammengefasst und als ein Rohziel 31 bezeichnet. Ein Fahrzeug 3 weist während der Annäherung an das Radargerät 1 eine zunehmende Anzahl an Rohzielen 31 auf, die zur Bildung der vom Fahrzeug 3 ausgehenden Messsignals beitragen. Rohziele 31 entstehen beispielsweise häufig an Elementen wie Fahrzeugkennzeichen, Außenspiegeln oder Türgriffen der Fahrzeuge 3.

Das Radargerät 1 kann in Bodennähe, z. B. in üblicher Höhe der Radachsen der Fahrzeuge 3, neben dem Fahrbahnrand 21, mit parallel zur Oberfläche der Fahrbahn 2 ausgerichteter Symmetrieachse 13, positioniert werden. Der vertikale Winkel 17 ist dadurch mit 0° zur Fahrbahn 2 eingestellt und braucht bei Berechnung der weiteren auswertbaren Merkmale nicht mehr berücksichtigt zu werden. In der Horizontalen 14 wird der Radarkegel 12 bevorzugt so ausgerichtet, dass die Fahrzeuge 3 an einem weit vom Radargerät 1 entfernten Ort (nahezu frontal) bis zu einem nahe am Radargerät 1 liegenden Ort (nahezu seitlich) erfasst werden können. Dazu ist die Symmetrieachse 13 des Radarkegels 12 gegenüber dem Fahrbahnrand 21 so ausgerichtet, dass sie die Fahrbahn 2 in einem horizontalen Winkel 15 kreuzt.

Es ist auch möglich das Radargerät 1 in Höhe einer die Fahrbahn 2 überspannenden Brücke 22, direkt über der Fahrbahn 2 und mit parallel zum Fahrbahnrand 21 ausgerichteter Symmetrieachse 13 zu positionieren. Der horizontale Winkel 15 ist dadurch mit 0° zum Fahrbahnrand 21 eingestellt und braucht bei Berechnung der weiteren auswertbaren Merkmale nicht mehr berücksichtigt zu werden. In der Vertikalen 16 wird der Radarkegel 12 so ausgerichtet, dass die Fahrzeuge 3 an einem weit vom Radargerät 1 entfernten Ort (nahezu frontal) bis zu einem nahe am Radargerät 1 liegenden Ort (nahezu von oben) erfasst werden können. Dazu ist die Symmetrieachse 13 des Radarkegels 12 gegenüber dem Fahrbahn 2 so angewinkelt, dass sie in einem vertikalen Winkel 17 auf die Oberfläche der Fahrbahn 2 trifft.

In einem darauf folgenden zweiten Verfahrensschritt wird eine einen Radarkegel 12 bildende Radarstrahlung 11 vom Radargerät 1 ausgesendet und die von den Fahrzeugen 3 durch Reflexion erzeugten Messsignale zu mehreren Messzeitpunkten tₙ mit dem Radargerät 1 erfasst.

Um einen ausreichenden Abstand zu einem prinzipbedingt miterfassten Grundrauschen zu den erfassten Messsignalen herzustellen und die Eindeutigkeit der Signalerfassung zu erhöhen, wird für die Signalintensität ein Schwellwert festgelegt, den das Messsignal überschreiten muss, um für eine weitere Signalverarbeitung verwendet zu werden.

Der Schwellwert kann grundsätzlich auch durch die technisch bedingte, nicht aktiv festlegbare Empfindlichkeitsgrenze des Empfängers des Radargerätes 1 vorgeben sein.

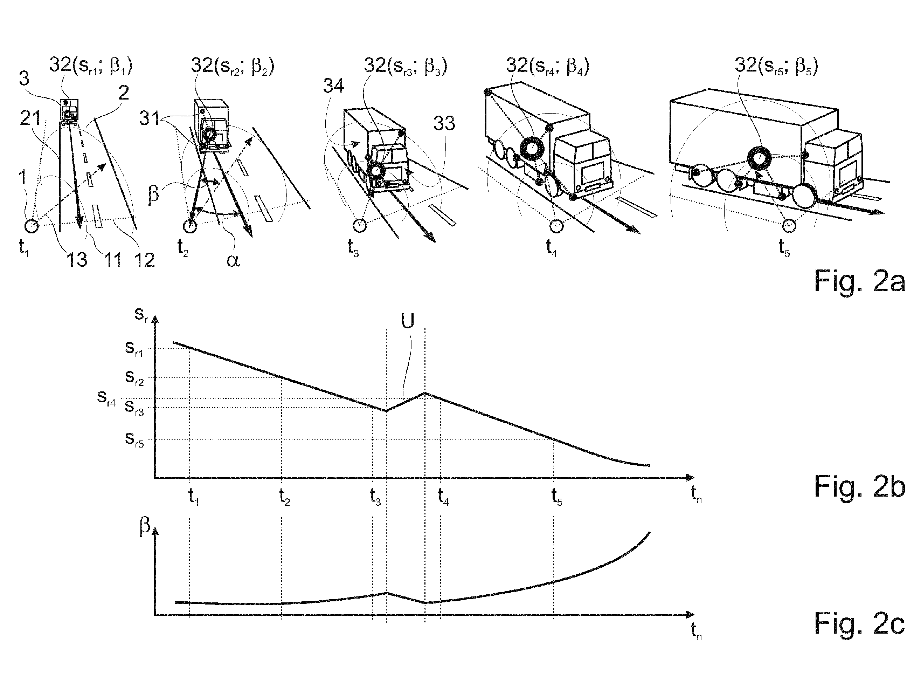

Wie in Fig. 2a auf fünf Messzeitpunkte tₙ reduziert dargestellt, erfolgt die Erfassung der Messsignale während der Durchfahrt des Fahrzeugs 3 durch den Radarkegel 12 zu mehreren Messzeitpunkten tₙ. Das Intervall zwischen den Messzeitpunkten tₙ kann dabei je nach erforderlicher Auflösung der Messung und den technischen Eigenschaften des Radargeräts 1 und einer zugehörigen Signalverarbeitungseinrichtung angepasst werden.

In einem dritten Verfahrensschritt werden aus den zu einem Messzeitpunkt tₙ erfassten Messsignalen jeweils eine Radialentfernung, ein Objektwinkel und eine Radialgeschwindigkeit (gemeinsam Messgrößen) für einer Vielzahl von Rohzielen 31 abgeleitet. Die Radialentfernung und der Objektwinkel sind Positionsgrößen. Sie werden dann, soweit als möglich, unter Beachtung einer maximal möglichen Streuung der Messgrößen, für an einem Fahrzeug 3 mögliche Rohziele 31, als einem Fahrzeug 3 zugehörig abgespeichert. Da die Messwerte die Positionsgrößen der Rohziele 31 mit umfasst, kann eine eineindeutige Zuordnung zeitgleich zu mehreren den Radarkegel 12 durchfahrenden Fahrzeugen 3 erfolgen. Die Zuordnung kann anhand von Ähnlichkeiten der unmittelbar ableitbaren Messgrößen der Rohziele 31 erfolgen. Rohziele 31, die sich in der Radialgeschwindigkeit, der Radialentfernung und im Objektwinkel kaum unterscheiden, können mit einer hohen Wahrscheinlichkeit ein und dem selben erfassten Fahrzeug 3 zugeordnet werden. Kann diese Zuordnung über mehrere Messzeitpunkte tₙ betätigt werden, so erhöht sich die Wahrscheinlichkeit exponentiell, sodass die Zuordnung bereits nach wenigen Intervallen eine hohe Zuverlässigkeit aufweist. Nachdem wenigstens einige der Messsignale zu mehreren Messzeitpunkten tₙ und damit wenigstens eine Teilmenge aus allen erfassten Rohzielen 31 eindeutig einem Fahrzeug 3 zugeordnet werden konnte, ist die Voraussetzung dafür geschaffen, das entsprechende Fahrzeug 3 auf seinem weiteren Weg durch den Radarkegel 12 zu verfolgen (Tracking) und weitere entstehenden Rohziele 31 mit den der Teilmenge entsprechenden Eigenschaften ebenfalls diesem Fahrzeug 3 zuzuordnen.

In einem vierten Verfahrensschritt werden aus den einem Fahrzeug 3 und einem Messezeitpunkt tₙ zugeordneten, abgeleiteten Radialentfernungen zu jedem Messzeitpunkt tₙ mit einer selben Rechenvorschrift jeweils eine spezifische Positionsgröße 32, hier eine spezifische Radialentfernung Sᵣ gebildet. Als die eine Rechenvorschrift kommen verschiedene Rechenvorschriften in Frage.

Z. B. soll die spezifische Positionsgröße 32 zu jedem Messzeitpunkten tₙ aus dem arithmetischen Mittelwert aller Radialentfernungen der von diesem Fahrzeug 3 erfassten Rohziele 31 bestimmt werden. Anstelle einer Rechenvorschrift zur Mittelwertbildung könnte auch mit einer anderen Rechenvorschrift die spezifische Positionsgröße 32 gebildet werden.

Die Bildung des spezifischen Positionsgröße 32 anhand von Radialentfernungen Sᵣ wird in der **Fig.2a** verdeutlicht und in der Beschreibung zum fünften Verfahrensschritt noch näher erläutert.

Nach der Bildung der spezifischen Positionsgrößen 32 wird das Fahrzeug 3 zu jedem Messzeitpunkt tₙ von der spezifischen Positionsgröße 32 verkörpert und kann während der Signalverarbeitung auf diese reduziert werden. Für die spezifischen Positionsgrößen 32 können dann, genau wie für die einzelnen Rohziele 31, die Radialgeschwindigkeit, die Radialentfernung und der Objektwinkel ermittelt und abgespeichert werden. Die zu den spezifischen Positionsgrößen 32 ermittelten Messgrößen können ebenfalls für die Berechnung der weiteren auswertbaren Merkmale (Fahrtrichtung und Fahrzeuggeschwindigkeit) des Fahrzeugs 3 verwendet werden.

Um das Fahrzeug 3 zu klassifizieren, kommt der Auswertung der spezifischen Positionsgrößen 32 eine erfindungswesentliche Bedeutung zu. In einem fünften Verfahrensschritt erfolgt ein Abspeichern aller während der Durchfahrt des Fahrzeugs 3 durch den Radarkegel 12 zu den Messzeitpunkten tₙ gebildeten spezifischen Positionsgrößen 32 als eine Funktion über die die Messzeitpunkte tₙ umfassende Messdauer. Der Verlauf der Funktion wird bewertet und es wird ein Abschnitt von Unstetigkeit U im Verlauf der Funktion festgestellt. Wie experimentell nachgewiesen werden konnte, ist dieser Abschnitt von Unstetigkeit U für die Fahrzeuggröße charakteristisch.

Die Entstehung des Abschnittes der Unstetigkeit U wird anhand von **Fig. 2b** erläutert. Wie bereits beschrieben wurde, wird die spezifische Positionsgröße 32 für einen Messzeitpunkt tₙ gemäß dem ersten Ausführungsbeispiel aus den Radialentfernungen aller zu diesem Messzeitpunkt tₙ erfassten Rohziele 31 des Fahrzeugs 3 gebildet. Je nach dem Fahrzeugwinkel α, den die Fahrtrichtung des Fahrzeugs 3 beim Durchfahren des Radarkegels 12 gegenüber dessen Symmetrieachse 13 einnimmt, ändern sich die erfassten Rohziele 31 ständig, das heißt, es werden zu den einzelnen Messzeitpunkten tₙ gleiche aber auch unterschiedliche Rohziele 31 erfasst, womit der Ort, welchem die spezifische Positionsgröße 32, mit einer spezifischen Radialentfernung Sᵣ und einem spezifischen Objektwinkel β, zugeordnet werden kann, kein Fixpunkt am Fahrzeug 3 ist, sondern auf der Oberfläche des Fahrzeuges 3 wandert, was sich in einer unstetigen Änderung der spezifischen Radialentfernung Sᵣ und des spezifischen Objektwinkels β äußert.

Bei dem in **Fig. 2a** und **Fig. 2b** gezeigten Beispiel werden zu den frühen Messzeitpunkten t₁ und t₂ im Wesentlichen die Oberflächen der Fahrzeugfront 33 von der Radarstrahlung 11 erfasst. Dementsprechend können auch die Rohziele 31 nur durch diese Oberflächen (z. B. das Nummernschild, der Kühlergrill, der das Führerhaus überragende Teil des Koffers) gebildet werden, womit die erfassten Radialentfernungen zu diesen Messzeitpunkten (t₁ und t₂) und folglich die ermittelte spezifische Radialentfernung Sᵣ nur durch den Ort der Fahrzeugfront 33 bestimmt sind.

Zum Messzeitpunkt t₃ befindet sich das Fahrzeug 3 bereits in einem solchen Objektwinkelbereich, dass neben den Oberflächen der Fahrzeugfront 33 auch Oberflächen der Fahrzeugflanke 34 von der Radarstrahlung 11 erfasst werden können. Es sei an dieser Stelle darauf hingewiesen, dass bei der Darstellung in **Fig. 2a** der Betrachtungswinkel um eine durch das Radargerät 1 verlaufende, imaginäre Hochachse mit der Durchfahrt des Fahrzeugs 3 mitgedreht wird, um die Verteilung der Rohziele 31 besser sichtbar zu machen. Tatsächlich befindet sich das Radargerät 1 jedoch mit dem von ihm ausgehenden Radarkegel 12 während der gesamten Messdauer in einer unveränderten Position gegenüber der Fahrbahn 2. Durch das erste Erfassen von Rohzielen 31 der Fahrzeugflanke 34 kommen zu Bildung der spezifischen Radialentfernung Sᵣ Radialentfernungen hinzu, die trotz kontinuierlicher Annnäherung des Fahrzeuges 3 wieder größer werden, womit die spezifische Radialentfernung Sᵣ in geringem Maße zunimmt.

Die Änderung ist jedoch noch so gering, dass diese im zeitlichen Verlauf der Funktion, siehe **Fig. 2b****,** kaum sichtbar werden. Bis zum Messzeitpunkt t₃ verläuft der Graph der Funktion deshalb in Form einer linear abfallenden Geraden, welche die kontinuierlich abnehmende Radialentfernungen der Rohziele 31 und damit die des spezifischen Radialentfernungswertes Sᵣ durch die Annäherung des Fahrzeugs 3 an das Radargerät 1 zum Ausdruck bringt.

Eine deutliche gegensinnige Änderung des spezifischen Radialentfernungswertes Sᵣ ereignet sich zwischen den Messzeitpunkten t₃ und t₄. Das Fahrzeug 3 erreicht gegenüber dem Radargerät 1 einen Objektwinkelbereich, in dem die Rohziele 31 an der Fahrzeugflanke 34 stärker gestreut liegen als an der Fahrzeugfront 33. Da nun im Wesentlichen die Rohziele 31 an der Fahrzeugflanke 34 zur Bildung der spezifischen Radialentfernung Sᵣ beitragen, verlagert sich die spezifische Radialentfernung Sᵣ in einem kurzen Zeitabschnitt kontinuierlich von der Fahrzeugfront 33 auf die Seitenflanke des Fahrzeugs 3. Diese kurzzeitige, gegensinnige Änderung der spezifischen Radialentfernung Sᵣ verursacht im Verlauf des Graphen einen deutlich sichtbaren Abschnitt von Unstetigkeit U mit einem vom bisherigen Verlauf des Graphen abweichenden Anstieg.

Auf dem restlichen Weg den das Fahrzeug 3 bis zum Verlassen des Radarkegels 12 zurücklegt (dem Messzeitpunkt t₄ nachfolgend) tritt keine wesentliche Änderung der der spezifischen Radialentfernung Sᵣ mehr auf. Der Graph der Funktion verläuft nach dem Abschnitt von Unstetigkeit U, wie bereits vor dem Messzeitpunkt t₃, als eine nahezu linear abfallende Gerade.

Die Länge des Abschnittes von Unstetigkeit U ist ein charakteristischer Ausdruck der Länge des Fahrzeugs 3 und kann dementsprechend ausgewertet werden. Bei einem langen Fahrzeug 3 (z. B. LKW oder Bus) wird die spezifische Radialentfernung Sᵣ durch den größeren Abstand zwischen Fahrzeugfront 33 und hinterem Ende der Fahrzeugflanke 34 eine größere und über einen längeren Zeitabschnitt ablaufende Änderung der Radialentfernung erfahren, als bei einem kurzen Fahrzeug 3 (z. B. PKW), bei dem das hintere Ende der Fahrzeugflanke 34 einen deutlich geringeren Abstand zur Fahrzeugfront 33 aufweist.

Da die Änderung der spezifischen Radialentfernung Sᵣ eine Funktion der Zeit ist, ist die Auswertung auch von der Fahrzeuggeschwindigkeit abhängig. Deshalb erfolgt in einem sechsten Verfahrensschritt (nicht dargestellt) eine Normierung der ermittelten Länge des Abschnittes von Unstetigkeit U auf eine berechnete Fahrzeuggeschwindigkeit.

Anhand eines Vergleichs der ermittelten und normierten Länge des Abschnittes von Unstetigkeit U eines erfassten Fahrzeugs 3 mit von hinterlegten, typischen geschwindigkeitsnormierten Längen solcher Abschnitte (Musterlängen), kann das Fahrzeug 3 anschließend klassifiziert werden.

Diese Musterlängen können gewonnen werden, indem mit dem gleichen Verfahren Fahrzeuge 3 erfasst werden, deren Klassifikation bekannt ist und die mit der normierten Geschwindigkeit durch den selben oder einen gleichen Radarkegel 12 fahren.

Ein solches Anlernen kann theoretisch unmittelbar vor der eigentlichen Durchführung des Verfahrens nach Anordnung des Radargerätes 1 zur Fahrbahn 2 erfolgen. Die Fahrzeuge 3 durchfahren dann den selben Radarkegel 12. In diesem Fall müsste das Radargerät 1 nicht zwingend exakt mit vorgegebenen Aufstellwinkeln 15, 17 und Abständen 14, 16 zur Fahrbahn 2 angeordnet werden, wenn die Normierung auf die Radialgeschwindigkeit und nicht auf die Fahrzeuggeschwindigkeit erfolgt.

Praktisch jedoch wird man das Radargerät 1 bevorzugt einmalig anlernen und dann für spätere Verfahrensdurchführungen das Radargerät 1 exakt so aufstellen, wie es zum Anlernen aufgestellt wurde. Die Fahrzeuge 3 durchfahren dann gewissermaßen einen gleichen Radarkegel 12.

In einem zweiten Ausführungsbeispiel soll anstelle der Änderung der spezifischen Radialentfernung Sᵣ anhand von **Fig.2c** die Änderung des spezifischen Objektwinkels β zur Auswertung und Klassifizierung genutzt werden. Auch hier zeigt sich im Graph der Funktion ein Abschnitt von Unstetigkeit U, der ein typische Länge in Abhängigkeit von der Fahrzeugklasse hat.

In einem weiteren Ausführungsbeispiel des Verfahrens soll die getroffene Klassifizierung, wie sie gemäß dem ersten oder zweiten Ausführungsbeispiel dargelegt wurde, durch Kombination mit einer weiteren Auswertungsmethode verifiziert bzw. verbessert werden.

Dazu wird bei der Verfolgung der Fahrzeuge 3 auf ihrem Weg durch den Radarkegel 12 (Tracking) die statistische Verteilung der Rohziele 31 zu vorgegebenen Messzeitpunkten tₙ erfasst. Die statistische Verteilung der Rohziele 31 stellt ein grobes Maß für die Dimensionen des erfassten Fahrzeugs 3 dar und liefert einen Hinweis auf die Fahrzeugklasse.

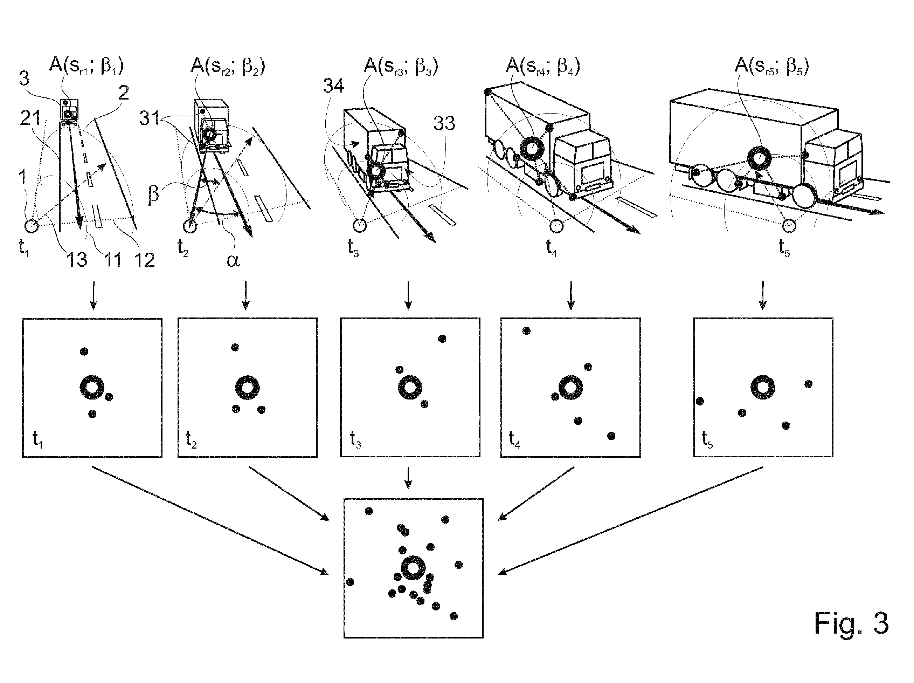

Wie in der **Fig.3** schematisch dargestellt, kann zur Aufnahme der statistischen Verteilung der Rohziele 31 für jedes erfasste Fahrzeug 3 ein temporäres Koordinatensystem verwendet werden, das während der Verfolgung (Tracking) mit dem Fahrzeug 3 mitbewegt wird. Die Bindung des temporären Koordinatensystems an das erfasste Fahrzeug 3 erfolgt messzeitpunktbezogen über die, für die Rohzielen 31 ermittelte, spezifische Radialentfernung sᵣ, zu dem betreffenden Messzeitpunkt tₙ, der den Ursprung des Koordinatensystems bildet. An festgelegten Positionen, die das Fahrzeug 3 bei der Durchfahrt durch den Radarkegel 12 erreicht und die auch für jedes andere erfasste Fahrzeug 3 gleich sind, werden alle zu diesen Messzeitpunkten tₙ erfassbaren Rohziele 31 des Fahrzeugs 3 in das temporäre Koordinatensystem eingetragen und abgelegt.

Abschließend werden alle von diesem Fahrzeug 3 erfassten und abgelegten Einzelverteilungen überlagert, indem die temporären Koordinatensysteme überlagert werden und die statistische Streuung der Rohziele 31 im Koordinatensystem ermittelt. Die Streuung ist für die unterschiedlichen Fahrzeugklassen charakteristisch. Hier geht nicht nur im Wesentlichen die Fahrzeuglänge, sondern auch die Fahrzeugbreite und Fahrzeughöhe ein. Anhand eines Vergleichs mit Streuungen bereits klassifizierter Fahrzeuge 3 kann eine Zuordnung des erfassten Fahrzeugs 3 zu Fahrzeugklassen erfolgen.

Es kann auch ausreichend sein, die Verteilung der Rohziele 31 des Fahrzeug 3 nur zu einem Messzeitpunkt tₙ zu erfassen. Der Messzeitpunkt tₙ ist vorteilhaft so zu wählen, dass eine möglichst charakteristische Verteilung und eine möglichst große räumliche Differenzierung verschiedener Rohziele 31 an dem erfassten Fahrzeug 3 erwartet werden kann. Am besten eignen sich dafür Positionen, in denen mehr Rohziele 31 an der Fahrzeugflanke 34 als an der Fahrzeugfront 33 erfasst werden und sich das Fahrzeug 3 perspektivisch nah am Radargerät 1 befindet. Entsprechend **Fig. 2a** trifft das insbesondere für alle Messzeitpunkte tₙ nach dem Messzeitpunkt t₄ zu. Wird zu einem solchen Messzeitpunkt tₙ die geometrische Verteilung der Rohziele 31 bewertet, können je nach Streuung der geometrischen Verteilung und dem Vergleich mit zuvor ermittelten und klassifizierten Streuungen Rückschlüsse auf die Fahrzeugklasse gezogen werden.

In einem weiteren Ausführungsbeispiel des Verfahrens soll das Verfahren gemäß dem ersten oder zweiten Ausführungsbeispiel zur Verifizierung um eine weitere Auswertungsmethode zur Klassifizierung ergänzt werden. Dazu kann ein von J.X. Fang et al.: "A ground vehicle classification approach using unmodulated continouswave radar" in: IET International Conference on Radar Systems 2007, S. 1-4 bereits für CW-Radar beschriebenes Verfahren verwendet werden, das hier auf die Verwendung mit FSK-Radar 1 erweitert wird.

Jedes Fahrzeug 3 weist i.d.R. verschiedene, die Radarstrahlung 11 besonders hoch reflektierende Oberflächenabschnitte auf. Häufig gehören dazu die Oberflächen von Anbauteilen, die sich von der Karosserie abheben, wie z.B. Kennzeichentafeln, Seitenspiegeln, Türgriffen, Kanten von Stoßfängern, Scheibeneinrahmungen, Karosserieabschnitte mit starken Winkelgradienten usw.. Werden an den Fahrzeugen 3 nur die Reflexionssignale dieser Oberflächenabschnitte erfasst und ausgewertet, lässt sich an einigen dieser Oberflächenabschnitte ein charakteristisches Reflexionsmuster nachweisen, die sich an gleichen Oberflächenabschnitten verschiedener Fahrzeuge 3 einer Fahrzeugklasse wiederfinden. Mit geeigneten Suchverfahren können diese Reflexionsmuster in den Reflexionssignalen gesucht und deren Anordnung ausgewertet werden. Ein Vergleich der Art und Anordnung der Reflexionsmuster mit bereits klassifizierten Reflexionsmustern ermöglicht dann die Klassifikation des erfassten Fahrzeugs 3.

### Bezugszeichenliste

- 1: - Radargerät
- 11: - Radarstrahlung
- 12: - Radarkegel
- 13: - Symmetrieachse
- 14: - horizontaler Aufstellabstand
- 15: - horizontaler Winkel
- 16: - vertikaler Aufstellabstand
- 17: - vertikaler Winkel

- 2: - Fahrbahn
- 21: - Fahrbahnrand
- 22: - Brücke

- 3: - Fahrzeug
- 31: - Rohziel
- 32: - spezifische Positionsgröße
- 33: - Fahrzeugfront
- 34: - Fahrzeugflanke

- tₙ: - Messzeitpunkt
- sᵣ: - Radialentfernung der spezifischen Positionsgröße, spezifische Radialentfernung
- β: - spezifische Objektwinkel, Objektwinkel der spezifischen Positionsgröße
- U: - Abschnitt von Unstetigkeit
- α: - Fahrzeugwinkel

## Patentansprüche

1. Verfahren zum Klassifizieren von fahrenden Fahrzeugen (3) durch Verfolgung einer Positionsgröße des Fahrzeuges (3), bei dem Fahrzeuge (3) beim Durchfahren eines durch Radarstrahlung (11) gebildeten Radarkegels (12) angemessen werden, indem die mit Radarstrahlung (11) beaufschlagten Oberflächen der Fahrzeuge (3) die Radarstrahlung (11) reflektieren und in einem die Radarstrahlung (11) aussendenden und empfangenden Radargerät (1) Messsignale generieren, mit folgenden Verfahrensschritten:
a) Anordnen eines Radargerätes (1), das innerhalb einer Messdauer zu mehreren Messzeitpunkten (tₙ) eine Vielzahl vom Messsignalen empfängt, wobei pro Messsignal eine Radialgeschwindigkeit und als Positionsgrößen (32) eine Radialentfernung (Sᵣ) und ein Objektwinkel (β) ableitbar sind, in einem bekannten vertikalen Aufstellabstand (16) und einem bekannten vertikalen Aufstellwinkel (17) zur Fahrbahnoberfläche einer Fahrbahn (2) sowie einem bekannten horizontalen Aufstellwinkel (15) und horizontalem Aufstellabstand (14) zu einem Fahrbahnrand (21) der Fahrbahn (2),
b) Aussenden einer einen Radarkegel (12) bildenden Radarstrahlung (11) mittels des Radargerätes (1) und Erfassen von Messsignalen zu mehreren Messzeitpunkten (tₙ),
c) Ableiten von Radialgeschwindigkeiten, Objektwinkeln und Radialentfernungen aus den Messsignalen pro Messzeitpunkt (tₙ) und Zuordnung zu einem diese gegebenenfalls verursachenden den Radarkegel (12) durchfahrenden Fahrzeug (3),
d) Bilden einer spezifischen Positionsgröße (32) pro Messzeitpunkt (tₙ) aus den einem Fahrzeug (3) zugeordneten Radialentfernungen (Sᵣ) oder Objektwinkeln (β) mit einer jeweils gleichen Rechenvorschrift sowie Berechnen einer Fahrzeuggeschwindigkeit,
e) Abspeichern der spezifischen Positionsgrößen (32) als Funktion über eine die Messzeitpunkte (tₙ) umfassende Messdauer und Feststellen eines Abschnittes von Unstetigkeit (U) im Verlauf der Funktion, der durch sprunghafte Änderungen der spezifischen Positionsgröße (32) über die Messzeit begrenzt ist,
f) Ermittlung einer geschwindigkeitsnormierten Länge des Abschnittes der Unstetigkeit (U) mit Hilfe der berechneten Fahrzeuggeschwindigkeit und Vergleich dieser geschwindigkeitsnormierten Länge des Abschnittes mit abgespeicherten für verschiedene Fahrzeugklassen typische geschwindigkeitsnormierte Längen solcher Abschnitte, um damit das Fahrzeug (3) zu klassifizieren.

2. Verfahren nach Anspruch 1, **dadurch gekennzeichnet,**
**dass** die spezifische Positionsgröße (32) pro Messzeitpunkt (tₙ) durch Berechnung des arithmetischen Mittelwertes der diesem Messzeitpunkt zugeordneten Radialentfernungen (Sᵣ) gebildet wird und wenigstens einer der Aufstellwinkel (15, 17) ein spitzer Winkel ist.

3. Verfahren nach Anspruch 1, **dadurch gekennzeichnet,**
**dass** die spezifische Positionsgröße (32) pro Messzeitpunkt (tₙ) durch Berechnung des arithmetischen Mittelwertes der diesem Messzeitpunkt (tₙ) zugeordneten Objektwinkel (β) gebildet wird und der horizontale Aufstellwinkel (15) ein spitzer Winkel ist und der vertikale Aufstellwinkel (17) < 5° ist.

4. Verfahren nach Anspruch 1, **dadurch gekennzeichnet,**
**dass** aus den zugeordneten Messsignalen messzeitpunktbezogen wenigstens ein fahrzeugbezogenes Koordinatensystem berechnet wird, dessen Lage und Ausrichtung zu jedem Messzeitpunkt (tₙ) durch einen temporären Ort des Koordinatenursprungs, bestimmt durch die spezifische Positionsgröße (32) und eine temporäre Fahrtrichtung bestimmt ist, dass die pro Messzeitpunkt (tₙ) abgeleiteten Radialentfernungen (Sᵣ) und Objektwinkel (β), die jeweils Ortskoordinaten eines Rohzieles (31) am Fahrzeug (3) zu diesem Messzeitpunkt (tₙ) darstellen, jeweils in das fahrzeugbezogene Koordinatensystem überführt werden und die statistische Verteilung der Lage der Rohziele (31) mit abgespeicherten, für verschiedene Fahrzeugklassen typischen Verteilungen verglichen werden, um damit die getroffene Klassifizierung des Fahrzeuges (3) zu verifizieren.

5. Verfahren nach Anspruch 4, **dadurch gekennzeichnet,**
**dass** die statistische Verteilung der Lage der Rohziele (31) zu einzelnen Messzeitpunkten (tₙ) zusammengeführt wird, indem die Koordinatensysteme überlagert werden.
